# FASCICULE DE BREVET EUROPEEN

(11) **EP 0 525 713 B1**
(45) Date de publication et mention de la délivrance du brevet: **22.11.1995**
(21) Numéro de dépôt: 92112844.3
(22) Date de dépôt: 28.07.1992
(51) Int. Cl.: G21D 1/00, G21C 17/013

(54) **Procédé d'intervention à distance sur un site, tel une centrale nucléaire endommagée**
Verfahren zum ferngesteuerten Eingreifen in eine Anlage, wie ein beschädigtes Kernkraftwerk
Method for remote intervention on a site, such as a damaged nuclear power plant

(30) Priorité: 01.08.1991 FR 9109810
(43) Date de publication de la demande: 03.02.1993
(73) Titulaire: GEC ALSTHOM SYSTEMES ET SERVICES SA, 75116 Paris (FR)
(72) Inventeur: Freneix, Gérard, F-44230 St Sebastien (FR)
(74) Mandataire: Fournier, Michel

(56) Documents cités:
- EP-A- 0 274 055
- EP-A- 0 275 874
- EP-A- 0 355 338
- GB-A- 1 461 944

## Description

La présente invention concerne un procédé d'intervention à distance sur un site, tel qu'une centrale nucléaire endommagée.

Le brevet EP-A-0 274 055 décrit un dispositif de transmission d'informations et/ou d'instructions à large bande passante et/ou de localisation entre un élément mobile et un poste de contrôle de cet élément, comportant un tube creux parallèle au trajet suivi par l'élément mobile, formant guide d'ondes, dont une face émissive est percée d'un réseau d'ouvertures de passage d'un rayonnement électromagnétique en hyperfréquences, l'élément mobile étant muni d'au moins une antenne d'émission et/ou de réception d'ondes hyperfréquences disposée en regard de la face du tube percée d'un réseau d'ouvertures, le tube creux étant relié à au moins un organe d'alimentation en ondes hyperfréquences et à un organe de réception d'ondes hyperfréquences provenant de lui.

Un tel dispositif permet l'échange d'informations analogiques à large bande et/ou numériques à haut débit, telles que d'une part des signaux téléphoniques et/ou vidéo, et/ou d'autre part des signaux de télémesures et/ou de télécommandes, et permet aussi des mesures de position et/ou de vitesse de l'élément mobile se déplaçant près du tube formant guide d'ondes hyperfréquence, et qui sera appelé guide d'ondes ci-après.

La présente invention concerne un procédé d'intervention à distance sur un site utilisant de tels guides d'ondes en tant que dispositif de transmission et de télécommande.

L'utilisation d'engins d'intervention commandés par ondes radioélectriques se propageant dans l'espace est connue. Elle présente des problèmes de brouillages et d'interférences. Des effets dits tunnels, similaires à ceux se présentant dans le cas d'une transmission souterraine, peuvent également empêcher la transmission des ondes de l'émetteur au récepteur. Par ailleurs la présence d'écrans peut perturber la transmission par ondes radioélectriques aériennes.

Le document EP-A-0 275 874 décrit un engin d'intervention de secours dans un milieu irradié utilisant un câble collecteur en tant que dispositif de transmission et de télécommande.

Ces problèmes sont résolus grâce au procédé d'intervention à distance conforme à l'invention.

Pour ce faire, ce procédé consiste essentiellement à disposer bout à bout des tronçons de guide d'ondes grâce à au moins un chariot télécommandé par la ligne de guides d'ondes ainsi réalisée et pourvu d'éléments de préhension pour la pose et d'au moins un bras manipulateur pour la connexion des tronçons de guides d'ondes, à partir d'un poste de contrôle comprenant un générateur et un récepteur de signaux et jusqu'au site à inspecter et à traiter éventuellement.

L'invention est exposée ci-après plus en détail à l'aide d'un dessin représentant seulement un mode préféré de réalisation.

Un poste de contrôle 1 est installé à une certaine distance d'un site 2.

Dans le cas d'une centrale nucléaire endommagée, cette distance sera déterminée par les risques de radiations nocives et le poste de contrôle 1 sera installé à l'extérieur du périmètre ainsi défini.

Ce poste de contrôle 1 comprend un générateur d'ondes hyperfréquences et une armoire réceptrice de signaux.

A partir de ce poste 1 est commandé au moins un chariot mobile 3 comprenant un coffre à générateur d'ondes hyperfréquences et une antenne 10 d'émission et de réception.

Par ailleurs, ce chariot 3 comporte un dispositif support d'un certain nombre de tronçons 4 de guides d'ondes, des éléments de préhension 5 permettant la prise d'un tronçon 4 dans le dispositif support, la pose de ce tronçon sur le sol et au moins un bras manipulateur 6 permettant la connexion de ce tronçon à l'extrémité d'un tronçon déjà posé.

De plus, le chariot comporte un bras élévateur non représenté sur lequel est installée une caméra de télévision rotative destinée à la localisation et l'inspection. Eventuellement, une antenne de localisation peut être installée sur le chariot afin de compléter les indications de localisation de la caméra.

Pour commander ces éléments, le poste de contrôle 1 comporte des moyens de commande 7 du déplacement du chariot 3, des éléments de préhension 5, des bras manipulateurs 6 et du bras élévateur et un écran 8 de visualisation des signaux envoyés par la caméra.

Un premier tronçon 4 de guide d'ondes est mis en place à proximité du poste de commande, relié à celui-ci par un câble coaxial 9. Le chariot 3 est mis en place à proximité de ce tronçon, son antenne 10 faisant face aux ouvertures de passage du rayonnement électromagnétique.

La ligne de guides d'ondes est alors effectuée par la répétition du cycle d'opérations suivant :
- déplacement du chariot 3 le long du dernier tronçon posé,
- arrêt du chariot 3 à proximité de l'extrémité de ce tronçon,
- pose et connexion d'un tronçon suivant grâce aux éléments de préhension 5 et aux bras manipulateurs 6.

Ce cycle est répété jusqu'à ce que le site soit atteint.

Dans le cas où le nombre de tronçons chargé est insuffisant, les cycles d'opérations sont interrompus, le chariot 3 est alors ramené au début de ligne où il est rechargé d'un certain nombre de tronçons 4 puis ramené à l'extrémité de la ligne réalisée.

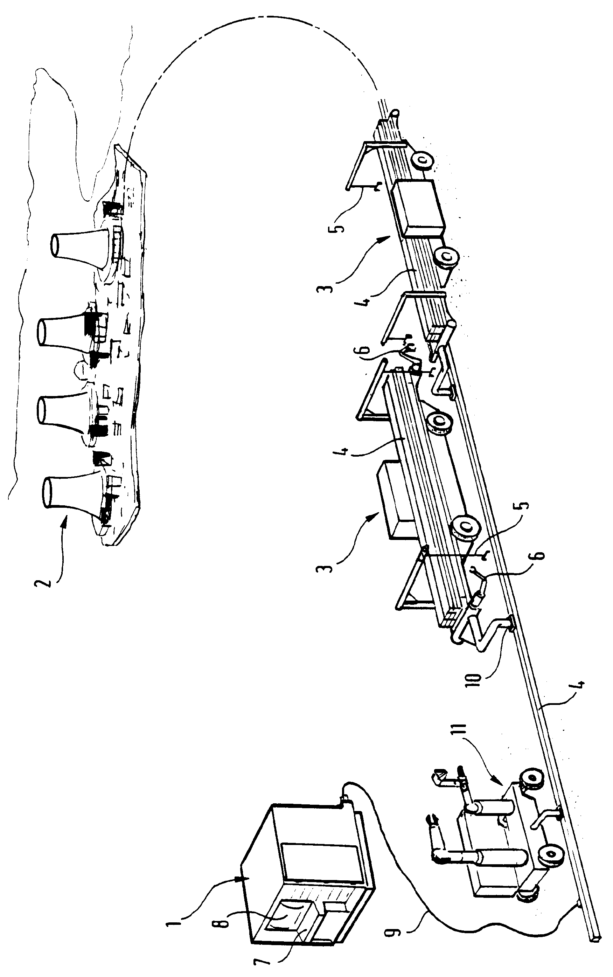

Pour augmenter la vitesse de mise en place des tronçons 4 de guide d'ondes, l'on peut utiliser deux chariots identiques 3 comme il est représenté sur le dessin, un des chariots intervenant sur la droite de la ligne et l'autre sur la gauche.

Ainsi, l'un des chariots 3 est actif et lorsque son stock de tronçon 4 est épuisé il est renvoyé en début de ligne pour être rechargé, tandis que l'autre chariot devient actif et pose ses tronçons 4. Le temps de rechargement en tronçons 4 n'est donc pas perdu.

Une fois sur le site, une inspection peut être réalisée grâce à la caméra et le bras de manipulateur peut être utilisé ou remplacé par un outillage de traitement, si besoin est.

La ligne de guide d'ondes étant réalisée tout type de véhicule télécommandé grâce à celle-ci peut être utilisé. La figure représente un exemple de véhicule d'intervention 11 pouvant alors être employé.

Pour augmenter la zone accessible à partir de la ligne de guides d'ondes, des chariots porte-mobiles peuvent transporter des mobiles d'intervention en un emplacement souhaité. Ces mobiles sont raccordés au chariot par un câble coaxial et ont donc un rayon d'action correspondant à la longueur de ce câble.

Par ailleurs, le site, en particulier la centrale nucléaire peut être équipée de guides d'ondes fixes. Si cette installation de guides d'ondes n'est pas endommagée, il est possible de la raccorder en téléopération à l'aide d'un chariot adéquat au poste de contrôle. Il suffit alors de la relier à la ligne réalisée par un câble coaxial. Si cette installation est partiellement endommagée, les parties encore utilisables peuvent être raccordées et remises en fonction.

## Revendications

1. Procédé d'intervention à distance sur un site, tel qu'une centrale nucléaire endommagée, caractérisé en ce qu'il consiste à disposer bout à bout des tronçons (4) de guides d'ondes grâce à au moins un chariot (3) télécommandé par la ligne de guides d'ondes ainsi réalisée et pourvu d'éléments de préhension (5) pour la pose et d'au moins un bras manipulateur (6) pour la connexion des tronçons (4) de guides d'ondes, à partir d'un poste de contrôle (1) comprenant un générateur et un récepteur de signaux et jusqu'au site (2) à inspecter et à traiter éventuellement.

2. Procédé selon la revendication 1, caractérisé en ce que le chariot (3) est chargé d'un certain nombre de tronçons (4) et en ce que la réalisation de la ligne est effectuée par la répétition du cycle d'opérations suivant jusqu'à ce que le site soit atteint :
- déplacement du chariot le long du dernier tronçon posé,
- arrêt du chariot à proximité de l'extrémité de ce tronçon,
- pose et connexion d'un tronçon suivant.

3. Procédé selon la revendication 2, caractérisé en ce que les cycles d'opérations sont interrompus lorsque tous les tronçons (4) chargés sur le chariot (3) sont posés, le chariot (3) étant alors ramené au début de la ligne de guides d'ondes, rechargé d'un certain nombre de tronçons (4) puis ramené à l'extrémité de la ligne réalisée.

4. Procédé selon l'une quelconque des revendications précédentes caractérisé en ce que la localisation et l'inspection sont réalisées à l'aide d'une caméra de télévision rotative installée sur un bras élévateur sur le chariot (3).

5. Procédé selon l'une quelconque des revendications précédentes caractérisé en ce que deux chariots (3) sont utilisés.

6. Procédé selon l'une quelconque des revendications précédentes, caractérisé en ce qu'une fois la ligne de guides d'ondes réalisée jusqu'au site, un outillage de traitement est installé sur le chariot (3).

7. Procédé selon l'une quelconque des revendications précédentes, caractérisé en ce que des chariots spécifiques d'intervention sont télécommandés sur le site grâce à la ligne de guides d'ondes réalisée.

## Patentansprüche

1. Verfahren zum ferngesteuerten Eingreifen in eine Anlage, wie zum Beispiel einem havarierten Kernkraftwerk, dadurch gekennzeichnet, daß es darin besteht, Wellenleiterabschnitte (4) aneinanderstoßend mit Hilfe mindestens eines durch die so gebildete Leitung ferngesteuerten Wagens (3) zu verlegen, der mit Greifmitteln (5) für das Verlegen und mindestens einem Manipulatorarm (6) für die Verbindung der Wellenleiterabschnitte (4) ausgestattet ist, und zwar unter Steuerung durch eine Kontrollstation (1), die einen Signalgenerator und einen Signalempfänger aufweist, wobei die Verlegung bis zur zu inspizierenden und eventuell zu reparierenden Anlage (2) reicht.

2. Verfahren nach Anspruch 1, dadurch gekennzeichnet, daß der Wagen (3) mit einer bestimmten Anzahl von Abschnitten (4) beladen wird und daß die Herstellung der Leitung durch die Wiederholung des folgenden Zyklus von Verfahrensschritten erfolgt, bis die Anlage erreicht ist:
- Verschiebung des Wagens entlang des letzten verlegten Abschnitts,
- Anhalten des Wagens in der Nähe des Endes dieses Abschnitts,
- Verlegen und Anschluß des folgenden Abschnitts.

3. Verfahren nach Anspruch 2, dadurch gekennzeichnet, daß die Operationszyklen unterbrochen werden, wenn alle auf dem Wagen (3) angelieferten Abschnitte (4) verlegt sind, worauf der Wagen (3) an den Anfang der Leitung zurückgeholt, mit einer bestimmten Anzahl von zusätzlichen Abschnitten (4) beladen und an das Ende der hergestellten Leitung zurückgebracht wird.

4. Verfahren nach einem beliebigen der vorhergehenden Ansprüche, dadurch gekennzeichnet, daß die Lokalisierung und Inspektion mit Hilfe einer drehbaren Fernsehkamera erfolgen, die auf einem Hebearm auf dem Wagen (3) installiert ist.

5. Verfahren nach einem beliebigen der vorhergehenden Ansprüche, dadurch gekennzeichnet, daß zwei Wagen (3) verwendet werden.

6. Verfahren nach einem beliebigen der vorhergehenden Ansprüche, dadurch gekennzeichnet, daß ein Reparaturwerkzeug auf dem Wagen (3) installiert wird, wenn die Leitung bis zur Anlage hergestellt ist.

7. Verfahren nach einem beliebigen der vorhergehenden Ansprüche, dadurch gekennzeichnet, daß spezielle Pannenfahrzeuge über die hergestellte Leitung in der Anlage ferngesteuert werden.

## Claims

1. A method of acting remotely on a site, such as a damaged nuclear power station, the method being characterized in that it consists in placing lengths (4) of waveguide end-to-end by means of at least one carriage (3) which is remotely controlled by the line of waveguides implemented in this way. the carriage being provided with handling equipment (5) for laying purposes and with at least one robot arm (6) for connecting the lengths (4) of waveguide together under the control of a control station (1) including a signal generator and a signal receiver, which line is laid to the site (2) that is to be inspected and optionally treated.

2. A method according to claim 1, characterized in that the carriage (3) is loaded with a certain number of lengths (4) and in that the line is installed by repeating the following cycle of operations until the site is reached:
the carriage is displaced along the last length to have been laid;
the carriage is stopped close to the end of said length; and
the next length is laid and connected.

3. A method according to claim 2. characterized in that the cycles of operations are interrupted when all of the lengths (4) loaded on the carriage (2) have been laid, the carriage (3) then being returned to the beginning of the line of waveguides, being reloaded with a certain number of lengths (4), and then being returned to the end of the line that has already been implemented.

4. A method according to any preceding claim, characterized in that positioning and inspection are performed using a rotary television camera installed on an elevator arm on the carriage (3).

5. A method according to any preceding claim, characterized in that two carriages (3) are used.

6. A method according to any preceding claim, characterized in that once the line of waveguides has been installed all the way to the site, treatment tooling is installed on the carriage (3).

7. A method according to any preceding claim, characterized in that special robot carriages are remotely controlled on the site using the line of waveguides that has been implemented.
